# EUROPEAN PATENT APPLICATION

(11) **EP 1 215 237 A2**
(43) Date of publication of application: **19.06.2002**
(21) Application number: 01310367.6
(22) Date of filing: 12.12.2001
(51) Int. Cl.: C08L 23/02, C08L 23/10, C08L 23/16, C08L 23/06

(54) **Electrical wire having a covering of a resin composition**

(30) Priority: 12.12.2000 JP 2000377498; 26.03.2001 JP 2001087906; 26.03.2001 JP 2001087907
(71) Applicant: Sumitomo Wiring Systems, Ltd., Yokkaichi-City, Mie, 510-8503 (JP); Sumitomo Electric Industries, Ltd., Osaka (JP)
(72) Inventor: Hase, Tatsuya, Yokkaichi-city, Mie 510-8503 (JP); Sugita, Takahiko, Yokkaichi-city, Mie 510-8503 (JP); Fujimoto, Hiroshi, Yokkaichi-city, Mie 510-8503 (JP); Sato, Masashi, Yokkaichi-city, Mie 510-8503 (JP); Matsumoto, Shinichi, Yokkaichi-city, Mie 510-8503 (JP)
(74) Representative: Paget, Hugh Charles Edward

(57) **Abstract**

An electrical wire, suitable for use in a vehicle, has a conductor and an electrically insulating covering on the conductor, wherein the covering is a resin composition comprising one or more first polymers, one or more second polymers and a filler in the form of filler particles. The first and second polymers satisfy at least one, preferably two or three, of the following requirements (a), (b) and (c):
(a) each first and second polymer has an immersion saturated water absorption rate of 3% or less,
(b) the or each first polymer has a crystallinity of less than 50% and the or each second polymer has a crystallinity of 50% or more,
(c) the or each first polymer has a melting point or softening temperature of less than 100°C and the or each second polymer has a melting point or a softening temperature of 100°C or above.

In this way a good balance of properties can be achieved.

## Description

### FIELD OF THE INVENTION

This invention relates to an electrical wire having a halogen-free resin composition as an electrically insulating covering on an electrical conductor core. Such an electrical wire is useful for example in a motor vehicle. The invention also relates to a method of making such a wire.

### DESCRIPTION OF THE PRIOR ART

Polyvinyl chloride has been much used as the covering material of electrical wire for an automobile, because it is superior in properties such as mechanical strength, extrusion processability, flexibility and colouring property. However, with recent concern for the global environment, halogen-free resin material has come to be used for the production of automobile parts including the covering of electrical wires in an automobile in place of polyvinyl chloride, because polyvinyl chloride discharges a harmful halogen gas on combustion.

A halogen-free resin composition in which a metal hydroxide is blended with a polyolefin-base polymer as a flame-retardant is known as a wear resistant resin composition having the merit of no generation of a poisonous gas such as a halogen gas on combustion (see JP-A-7-176219, JP-A-7-78518 and the like). In order that such a flame-retarding resin composition has a self-extinction property, a large quantity of a filler such as a metal hydroxide is required to be added, but this causes problems that mechanical strength such as the wear resistance, tensile strength and the like of the composition are much reduced. Furthermore, as the amount of metal hydroxide added is increased, water resistance deteriorates and, in particular, electrical properties on immersion in water deteriorate.

Furthermore, when the amount of filler in a resin composition is increased, the composition tends to whiten, particularly on bending. In order to prevent the deterioration of mechanical strength, it may be considered that amounts of a polypropylene having a comparatively high hardness and a high density polyethylene are increased, but the flexibility of the covered electrical wire is reduced thereby and the processability becomes poor.

In order to enhance flexibility, a resin having a low crystalline component content, i.e. having low crystallinity, and a rubber component are used. However, in this case, the oil resistance of the resin composition is lowered. Furthermore, in order to enhance flexibility, it could be considered that an elastomer having low melting point and softening point should be used, but this results in a resin composition that is deformed at high temperature and is melt-fused.

### SUMMARY OF THE INVENTION

The object of the present invention is to provide an electrical wire having as its covering a halogen-free olefin-based resin composition providing a good balance of properties, for example water resistance, oil resistance, flexibility at high temperature, wear resistance, minimal whitening and the like which are required for the covering material of an electrical wire, e.g. for an automobile.

According to the invention there is provided an electrical wire having a conductor and an electrically insulating covering on the conductor, wherein the covering is a resin composition comprising at least first and second polymers and a filler in the form of filler particles, the first and second polymers satisfying at least one of the following requirements (a), (b) and (c):
(a) the first and second polymers each have an immersion saturated water absorption rate of 3% or less,
(b) the or each first polymer has a crystallinity of less than 50% and the or each second polymer has a crystallinity of 50% or more,
(c) the or each first polymer has a melting point or softening temperature of less than 100°C and the or each second polymer has a melting point or a softening temperature of 100°C or above.

Preferably the first and second polymers satisfy at least two of the requirements (a), (b) and (c), e.g. (a) and (b), (a) and (c) or (b) and (c). Most preferably they satisfy all three requirements.

Preferably there are no polymer resin components in the resin composition, other than the first and second polymers. Thus for example, when only a single first polymer and only a single second polymer is employed, these are the only two polymer components present.

In a second aspect the invention provides a method of making the electrical wire by mixing the polymer components and the filler and applying the resin composition so formed to an electrical conductor as a covering.

The filler used in the present invention is preferably fire-resistant and may be either an inorganic filler or an organic filler, but an inorganic filler is preferable. Examples of the inorganic filler which may be used include carbon materials, and oxides, hydroxides, carbonates, sulfates, silicates and nitrides of a metal (for example alkali metal, alkaline earth metal, transition metal or the like) having a flame retarding property in the resin composition. These can be used alone or in combination.

Metal hydroxides, for example, magnesium hydroxide, aluminum hydroxide and the like are most preferred as the filler of the composition for coating an electrical wire because these fillers impart particularly good flame retarding properties to the resin. Preferably no fibrous filler is present in the composition. Preferably a metal hydroxide or a mixture of metal hydroxides is the only filler present.

The filler particles may be used untreated, or their surface may be treated, in particular with a coupling agent, a fatty acid or a salt of fatty acid before coating by the polymer components. As a coupling agent, an aminosilane coupling agent, a vinylsilane coupling agent, an epoxysilane coupling agent, a methacryloxysilane coupling agent and the like may be used. As the fatty acid or salt thereof, higher fatty acids, e.g. having 12 or more carbon atoms, such as stearic acid, oleic acid and the like or a salt thereof can be used.

As the first of the requirements (a), (b) and (c) given above, the first and second polymer components are polymers having an immersion saturated water absorption rate of 3% or less, as measured in accordance with JIS K 7209: 2000 (ISO 62:1999).

The or each second polymer, provided that it has an immersion saturated water absorption rate of 3% or less, is not specifically limited so far as the water absorption rate is satisfied, but preferably is selected from the following: propylene homopolymer, propylene block or random copolymer, high density polyethylene (HDPE), linear low density polyethylene (LLDPE), low density polyethylene (LDPE), ultra low density polyethylene, polybutene, polystyrene, ethylene-vinyl acetate copolymer, ethylene-ethyl acrylate copolymer, ethylene-methyl acrylate copolymer, ethylene-propylene rubber, ethylene-butene rubber, olefin-based elastomer (for example, poly(propylene-ethylene/propylene) copolymer), and styrene-based elastomer (for example, a block copolymer having segments of polystyrene, and rubber or elastomeric segments (such as polybutadiene (SBS, SBR) or polyisoprene (SIS,SER)) and a hydrogenated product thereof (such as SEBS, HSBR, SEPS, HSIR).

Further, an ionomer resin in which a metal ion has been introduced into a molecule can be used.

These examples of the second polymer may be used alone, or used as a blend of two or more thereof.

The first polymer, provided that it has an immersion saturated water absorption rate of 3% or less is especially one having good affinity with the filler and is not specifically limited, but is preferably a polymer having a functional group. The functional group may include a carboxylic acid group or a carboxylic anhydride group, an epoxy group, an amido group, an amino group, a silicon-modified group (including a Si-O group), and the like. These functional groups can be introduced by copolymerizing a monomer having the functional group, or graft-copolymerizing a monomer having a functional group on a skeleton polymer. The functional group is introduced into the polymer before mixing of the polymer with the filler particles. A polymer having a carboxylic acid group or an acid anhydride group in particular has a high affinity to an inorganic filler, in particular to a metal hydroxide.

As the monomer for introducing a carboxylic acid group or a carboxylic anhydride group into the first polymer, an unsaturated carboxylic acid or its anhydride or ester can be used. Maleic acid, fumaric acid, an anhydride thereof, a monoester or diester thereof and the like are preferred.

As a monomer for introducing an epoxy group into the first polymer, a compound having a glycidyl group (for example, glycidyl methacrylate and the like) can be employed.

The ratio of the monomer having a functional group to the total polymer weight may be 0.01 to 30% by weight and preferably 0.1 to 10% by weight.

As the polymer on to which a functional group is introduced, various polymers can be used. Preferred examples are those which were previously indicated for use as the second polymer.

As the second requirement (b) given above, the first polymer has a crystallinity of less than 50% and the second polymer has a crystallinity of 50% or more.

Provided that its crystallinity is 50% or more, the second polymer is not specifically limited, and a polymer (for example, a polyamide-based polymer, a polyester-based polymer and the like) which is known as an engineering plastic may be used as an alternative to the polymers previously exemplified as the second polymer having an immersion saturated water absorption rate of 3% or less.

As the or each first polymer having a crystallinity of less than 50%, any polymer can be used provided that its crystallinity is less than 50%, but a polymer having a functional group as described above is preferable. The functional group is as described for the above-mentioned first polymer having an immersion saturated water absorption rate of 3% or less and having good affinity with a filler.

Examples of preferred polymers which can be used as the first polymer, provided that it has a crystallinity of less than 50% are as below:
ultra low density polyethylene, ethylene-vinyl acetate copolymer, ethylene-ethyl acrylate copolymer, ethylene-methyl acrylate copolymer, ethylene-propylene rubber, ethylene-butene rubber, olefin-based elastomer (for example, poly(propylene- ethylene/propylene) copolymer and the like), and styrene-based elastomer (for example, a block copolymer having segments of polystyrene and a rubber phase (such as polybutadiene (SBS, SBR) or polyisoprene (SIS,SER)) and a hydrogenated product thereof (SEBS, HSBR, SEPS, HSIR), and ionomer resin in which a metal ion has been introduced into the molecule.

The third requirement (c) given above is that the first polymer has a melting point or a softening temperature of less than 100°C and the second polymer has a melting point or a softening temperature of 100°C or more. "Softening temperature" is a Vicat softening temperature measured in accordance with JIS K 7206:1999.

The second polymer in this case is not specifically limited so long as it has a melting point or a softening temperature of 100°C or more, and a polymer (for example, a polyamide-based polymer, a polyester-based polymer (PET, PEN etc.) and the like) which is known as an engineering plastic may be used as an alternative to the polymers previously exemplified as the second polymer having an immersion saturated water absorption rate of 3% or less. Furthermore, an elastomer (for example, a polyester-based elastomer, a polyamide-based elastomer and the like) may be used.

As the first polymer, to meet requirement (c), any polymer can be used so long as it has a melting point or softening temperature is 100°C or higher, but a polymer having a functional group as described above is preferred. The functional group should provide good affinity with the filler.

Examples of preferred polymers which can be used as the first polymer, provided that is has a melting point or softening temperature of less than 100°C are as below:
low density polyethylene, ultra low density polyethylene, ethylene-vinyl acetate copolymer, ethylene-ethyl acrylate copolymer, ethylene-methyl acrylate copolymer, ethylene-propylene rubber, ethylene-butene rubber, olefin-based elastomer (for example, poly(propylene -ethylene/propylene) copolymer and the like), and styrene-based elastomer (for example, a block copolymer having segments of polystyrene and rubber segments (such as polybutadiene (SBS, SBR) or polyisoprene (SIS,SER)) and a hydrogenated product thereof (SEBS, HSBR, SEPS, HSIR), and an ionomer resin in which a metal ion has been introduced into a molecule.

Preferably the hardness of the second polymer is greater than the hardness of the first polymer. "Hardness" is a durometer hardness measured in accordance with JIS K 7215:1986.

Preferably, the flexural modulus of the second polymer is larger than the flexural modulus of the first polymer. The flexural modulus of the first polymer is preferably less than 50 MPa, while that of the second polymer is preferably greater than 200 MPa. "Flexural modulus" is measured in accordance with JIS K 7106.

In particular, the preferred polymer as the first polymer and having good affinity with a filler is one containing a carboxylic acid group or acid anhydride group. The first polymer may be an acid anhydride-modified ethylene-vinyl acetate copolymer, an acid anhydride-modified ethylene-ethyl acrylate copolymer, an acid anhydride-modified ethylene-propylene rubber, an acid anhydride-modified low density polyethylene, an acid anhydride-modified linear low density polyethylene, an acid anhydride-modified poly(propylene-ethylene/propylene) copolymer, an acid anhydride-modified thermoplastic elastomeric block copolymer containing polystyrene segments which are relatively hard and polyalkene segments which are softer and provide elastomeric properties, such as an acid anhydride-modified styrene-butadiene rubber, and an acid anhydride-modified hydrogenated styrene-butadiene rubber, but is not limited to these.

When such a polymer modified with carboxylic acid or acid anhydride is employed as the first polymer and a metal hydroxide is the filler, the composition should preferably contain no component, other than the metal hydroxide, which reacts with the carboxylic acid or anhydride group of the first polymer. It is desired that the first polymer bonds directly to the metla hydroxide during mixing or extrusion, to improve the mixing or dispersion of the metal hydroxide particles in the composition.

It is preferable that at least one of the first and second polymers is relatively soft, in particular has a Shore D hardness of not more than 50.

The proportion of the filler, the first polymer and the second polymer in the composition may be suitably selected according to the particular identity of these components and the intended use of the wire containing the resin composition. It is preferred that the second polymer or polymers constitute at least 50% by weight, more preferably 60 to 97% by weight of the total polymer content. The first polymer is thus preferably 50% or less, preferably 3 to 40%.

The production process of the resin composition of the present invention is not limited, but the resin composition of the present invention is usually produced by kneading the filler and the first polymer or polymers, and then by kneading the obtained mixture and the second polymer or polymers. Alternatively, the resin composition of the present invention can be also produced by simultaneously kneading the filler, the first polymer or polymers having good affinity with the filler and the second polymer or polymers. In the either case, when the first polymer has high affinity with a filler, it is more easily adhered on the filler than the second polymer. Therefore, a morphology in which the first polymer surrounds the filler particles and the second polymer fills up the space between the coated fillers is formed. This is a so-called spotted or island structure in which the second polymer is "continuous phase" and the coated fillers are "discontinuous phase". The morphology can be determined by an electron microscope picture of the resin composition, as illustrated below.

The resin composition may be applied to an electrical conductor to form an insulating covering in a conventional manner, in particular by extrusion. Preferably, the conductor is covered with the composition to a thickness in the range 0.15 to 0.35 mm, more preferably 0.2 mm to 0.3 mm. If the coating thickness is less than 0.2 mm, the covered wire may have a reduced wear resistance, but may be satisfactory for some purposes. If the coating thickness is more than 0.3 mm, the covered wire may have a reduced flexibility, but may be satisfactory for some purposes.

In addition to the above-mentioned components, various conventional compounding agents can be added to the resin composition of the present invention in dependence on the use of the wire. Examples of the compounding agents include a thermal stabilizer (oxidation inhibitor and the like), a metal deactivator (copper inhibitor and the like), a lubricant (fatty acid-based lubricant, fatty acid amide-based lubricant, metal soap, hydrocarbon-based lubricant (wax), ester-based lubricant, silicone-based lubricant and the like), a coupling agent, a softening agent (process oil and the like), a crosslinking agent and the like.

The polymers of the resin composition may be not cross-linked. In this case there is present no cross-linking agent, such as a peroxide, and in the composition as applied as a wire covering there is no cross-linking agent nor decomposition product of a cross-linking agent.

The resin composition of the present invention can alternatively be cross-linked if required, for example, if high heat resistance is required. The crosslinking can be carried out using a chemical crosslinking agent, but may be carried out by radiation (for example, ultra violet rays, electron beam, and the like).

The first and second polymers are selected to be free of halogen, and as mentioned may be substantially the only polymer materials in the composition, i.e. no other polymer components are present.

### BRIEF DESCRIPTION OF THE DRAWINGS

Fig. 1 is an electron micrograph of the structure of the resin composition of Example 38, and
Fig. 2 is an electron micrograph of the structure of the resin composition of Example 39.

### EXAMPLES

The present invention is specifically illustrated below. Examples of the invention employing fire-resistant, halogen-free resin compositions and Comparative Examples are given. In the different tables, the same examples of the invention appear repeatedly, in order to demonstrate clearly the various comparisons with the comparative examples.

### Examples 1 to 6 and Comparative Examples 1 to 4

The components shown in Tables 1 and 2 were mixed in the amounts (part by weight) shown, and kneaded at a screw rotational speed of 200rpm by a twin-screw extruder (screw diameter: 32mm) to obtain pellets. The final kneading temperature was 250 to 260°C for Examples 1, 4, 5 and 6 and Comparative Examples 1 to 3, and 180 to 230°C for the other examples.

The pellets obtained were dried and extrusion-molded at a coating thickness of 0.28mm around a conductor of 0.5mm² section, formed of seven soft copper wires having a diameter of 0.30mm. Die nipples having diameters of 0.93mm and 1.45mm were used for extrusion molding. The extrusion temperature of the die was 180 to 250°C and 160 to 240°C for the cylinder, and the extrusion molding was carried out at a linear velocity of 100m/min.

The coated resin composition was irradiated with electron beam in Examples 2 and 3 and Comparative Examples 3 and 4, to provide cross-linking.

Conditions of electron beam irradiation:
Equipment: EPS-750KV
Irradiation amount: 120KGy

The hydrothermal resistance of the coated electric wire obtained was tested in accordance with ISO 6722. When the insulation resistance value is 1x10⁹Ω mm or more after 35 days, the sample was given "pass".

The results are shown in Tables 1 and 2.

**Table 1**

| Example No. | | 1 | 2 | 3 | 4 | 5 | 6 |
|---|---|---|---|---|---|---|---|
| First polymer | EVA ¹⁾ | | 20 | 60 | | | |
| | MAH-EVA ²⁾ | 30 | 20 | | | 20 | |
| | MAH-SEBS ³⁾ | | | | 30 | 30 | 30 |
| | Ionomer ⁴⁾ | | | | | | 10 |
| Second polymer | PP ⁵⁾ | 70 | | | 50 | 50 | 60 |
| | HDPE ⁶⁾ | | 60 | 40 | | | |
| | LLDPE ⁷⁾ | | | | 20 | | |
| Magnesium hydroxide ⁸⁾ | | 100 | 120 | 90 | 180 | 200 | 80 |
| Antioxidant ⁹⁾ | | 1 | 1 | 1 | 1 | 1 | 1 |
| Crosslinking aid ¹⁰⁾ | | | 5 | 5 | | | |
| Total | | 201 | 226 | 196 | 281 | 301 | 181 |
| Hydrothermal resistance | | Pass | Pass | Pass | Pass | Pass | Pass |

| | | | | | | | |
|---|---|---|---|---|---|---|---|
| Components: 1) EVA: EV360 (saturated water absorption rate: 1% or less) manufactured by Mitsui DuPont Chemical Co., Ltd. (ethylene-vinyl acetate copolymer). | | | | | | | |
| 2) MAH-EVA: HPR VR103 (saturated water absorption rate: 1% or less) manufactured by Mitsui DuPont Chemical Co., Ltd. (ethylene-vinyl acetate copolymer modified with maleic anhydride). | | | | | | | |
| 3) MAH-SEBS: TUFTEC M1913 (saturated water absorption rate: 1% or less) manufactured by Asahi Kasei Corporation; (hydrogenated block copolymer of styrene and butadiene, modified with maleic anhydride). | | | | | | | |
| 4) Ionomer: HIMILAN 1706 (saturated water absorption rate: 1% or less) manufactured by Mitsui DuPont Chemical Co., Ltd. | | | | | | | |
| 5) PP: RB610A (saturated water absorption rate: 1% or less) manufactured by Tokuyama Corporation; (polypropylene/polyethylene block copolymer with more than 50 weight % propylene). | | | | | | | |
| 6) HDPE: HIZEX 5305E (saturated water absorption rate: 1% or less) manufactured by Mitsui Chemical Co., Ltd. | | | | | | | |
| 7) LLDPE: DFDJ 7540 (saturated water absorption rate: 1% or less) manufactured by Japan Uniker Co., Ltd. | | | | | | | |
| 8) Manufactured by Kyowa Chemicals Co., Ltd. | | | | | | | |
| 9) TOMINOX TT manufactured by Yoshitomi Fine Chemicals, Ltd. | | | | | | | |
| 10) ESTER TMPT manufactured by New Nakamura Chemical Co., Ltd. | | | | | | | |

**Table 2**

| Comparative Example No. | | 1 | 2 | 3 | 4 |
|---|---|---|---|---|---|
| First polymer | EVA ¹⁾ | | | 30 | |
| | MAH-EVA ²⁾ | | 20 | 10 | |
| | MAH-SEBS ³⁾ | | | | |
| | Ionomer ⁴⁾ | | | | |
| Second polymer | PP ⁵⁾ | 100 | 50 | | |
| | HDPE ⁶⁾ | | | 30 | |
| | LLDPE ⁷⁾ | | | | 100 |
| | Nylon 6 ¹¹⁾ | | 30 | 30 | |
| Magnesium hydroxide ⁸⁾ | | 90 | 50 | 150 | 100 |
| Antioxidant ⁹⁾ | | 1 | 1 | 1 | 1 |
| Crosslinking aid ¹⁰⁾ | | | | 4 | 4 |
| Total | | 191 | 151 | 255 | 251 |
| Hydrothermal resistance | | Reject | Reject | Reject | Reject |
| Components:- 1) to 10) as for Table 1. 11) Nylon 6: 1013B (saturated water absorption rate: 10% or more) UBE Industries Co., Ltd. | | | | | |

### Examples 10 to 14 and Comparative Examples 5 to 9

Coated electrical wires were produced by the same procedure as in Examples 1 to 6, using the components shown in Tables 3 and 4. Further, electron beam irradiation was carried out in Examples 11 and 12 and Comparative Example 6 under the same conditions as in Examples 2 and 3, to provide cross-linking.

The oil resistance, whitening property and flexibility of the coated electric wire obtained were measured by methods below.

### Oil resistance:-

After the coated wire had been immersed for 48 hours in an engine oil IRM 902 (ISO 1817, prescribed oil) at 100°C, tensile strength and elongation at break were measured at the conditions of a marked line interval of 20mm and a tensile linear velocity of 200mm/min. Those in which the tensile strength is 15.7MPa or more and the elongation at break is 125% or more were given as "pass".

### Whitening:-

The presence or absence of the whitening was inspected after winding the wire on its own diameter. No whitening is referred to as "pass".

### Flexibility-:

The workability (in general operation such as the bundling of an electric wire, wiring and the like) of the coated wire was judged by touch feeling by a worker.

The results are shown in Tables 3 and 4.

**Table 3**

| Example No. | | 10 | 11 | 12 | 13 | 14 |
|---|---|---|---|---|---|---|
| First polymer | EVA ¹⁾ | | 20 | 60 | | |
| | MAH-EVA ²⁾ | 30 | 20 | | | 20 |
| | MAH-SEBS ³⁾ | | | | 30 | 30 |
| Second polymer | PP ⁵⁾ | 70 | | | 50 | 50 |
| | HDPE ⁶⁾ | | 60 | 40 | | |
| | LLDPE ⁷⁾ | | | | 20 | |
| Magnesium hydroxide ⁸⁾ | | 100 | 120 | 90 | 180 | 200 |
| Antioxidant ⁹⁾ | | 1 | 1 | 1 | 1 | 1 |
| Crosslinking aid ¹⁰⁾ | | | 5 | 5 | | |
| Total | | 201 | 226 | 196 | 281 | 301 |
| Oil resistance | | Pass | Pass | Pass | Pass | Pass |
| Whitening | | Pass | Pass | Pass | Pass | Pass |
| Flexibility | | Good | Good | Good | Good | Good |
| Components 1) to 10) are as for Table 1. Crystallinity values are: EVA: Crystallinity 30% or less MAH-EVA: Crystallinity 30% or less MAH-SEBS: Crystallinity 30% or less PP: Crystallinity 60% HDPE: Crystallinity 85% LLDPE: Crystallinity 70% | | | | | | |

**Table 4**

| Comparative Example No. | | 5 | 6 | 7 | 8 | 9 |
|---|---|---|---|---|---|---|
| First polymer | EVA ¹⁾ | | | 100 | 50 | |
| | MAH-EVA ²⁾ | | | | 50 | |
| | MAH-SEBS ³⁾ | | | | | 100 |
| Second polymer | PP ⁵⁾ | 100 | | | | |
| | HDPE ⁶⁾ | | 100 | | | |
| | LLDPE ⁷⁾ | | | | | |
| Magnesium hydroxide ⁸⁾ | | 90 | 70 | 150 | 100 | 140 |
| Antioxidant ⁹⁾ | | 1 | 1 | 1 | 1 | 1 |
| Crosslinking aid ¹⁰⁾ | | | 4 | | | |
| Total | | 191 | 155 | 251 | 201 | 241 |
| Oil resistance | | Pass | Pass | Reject | Reject | Reject |
| Whitening | | Reject | Reject | Pass | Pass | Pass |
| Flexibility | | Bad | Bad | Good | Good | Good |
| Components 1) to 10) as above. | | | | | | |

### Examples 15 to 19 and Comparative Examples 10 to 13

Coated electrical wires were produced by the same procedure as in Examples 1 to 6, using the components shown in Tables 5 and 6. Further, electron beam irradiation was carried out in Examples 16 and 17 and Comparative Example 11 under the same conditions as in Examples 2 and 3.

The flexibility and whitening property were determined as above, and melt fusion and heating deformation property of the coated wires were measured by methods set out below.

### Melt fusion:-

The coated electric wire was wound on a cylinder of its own diameter and heated at 100°C for 30 minutes, and the presence or absence of melt fusion was inspected. No melt fusion is referred to as "pass".

### Heating deformation property:-

The coated electric wire was loaded by 500gf and retained at 100°C for 30 minutes. A deformation ratio of 30% or less is referred to as "pass". The deformation ratio is the ratio of the change of thickness after test to the thickness of the original (before loading).

The results are shown in Tables 5 and 6.

**Table 5**

| Example No. | | 15 | 16 | 17 | 18 | 19 |
|---|---|---|---|---|---|---|
| First polymer | EVA ¹⁾ | | 20 | 60 | | |
| | MAH-EVA ²⁾ | 30 | 20 | | | 20 |
| | MAH-SEBS ³⁾ | | | | 30 | 30 |
| Second polymer | PP ⁵⁾ | 70 | | | 50 | 50 |
| | HDPE ⁶⁾ | | 60 | 40 | | |
| | LLDPE ⁷⁾ | | | | 20 | |
| Magnesium hydroxide ⁸⁾ | | 100 | 120 | 90 | 180 | 200 |
| Antioxidant 9) | | 1 | 1 | 1 | 1 | 1 |
| Crosslinking aid ¹⁰⁾ | | | 5 | 5 | | |
| Total | | 201 | 226 | 196 | 281 | 301 |
| Flexibility | | Good | Good | Good | Good | Good |
| Whitening | | Pass | Pass | Pass | Pass | Pass |
| Melt fusion | | Pass | Pass | Pass | Pass | Pass |
| Heating deformation property | | Pass | Pass | Pass | Pass | Pass |
| Components 1) to 10) as above. Melting and softening temperatures of the polymers: EVA: Melting point 77°C MAH-EVA: Melting point 60°C MAH-SEBS: Softening temperature 65°C PP: Melting point 168°C HDPE: Melting point 132°C LLDPE: Melting point 124°C | | | | | | |

**Table 6**

| Comparative Example No. | | 10 | 11 | 12 | 13 |
|---|---|---|---|---|---|
| First polymer | EVA ¹⁾ | | | 80 | 50 |
| | MAH-EVA ²⁾ | | | 20 | |
| | MAH-SEBS ³⁾ | | | | 50 |
| Second polymer | PP ⁵⁾ | 100 | | | |
| | HDPE ⁶⁾ | | 50 | | |
| | LLDPE ⁷⁾ | | 50 | | |
| Magnesium hydroxide ⁸⁾ | | 90 | 80 | 150 | 100 |
| Antioxidant ⁹⁾ | | 1 | 1 | 1 | 1 |
| Crosslinking aid ¹⁰⁾ | | | 4 | | |
| Total | | 191 | 185 | 251 | 201 |
| Flexibility | | Bad | Bad | Good | Good |
| Whitening | | Reject | Reject | Pass | Pass |
| Melt fusion | | Pass | Pass | Reject | Reject |
| Heating deformation property | | Pass | Pass | Reject | Reject |
| Components 1) to 10) as above. | | | | | |

### Examples 20 to 23

Coated electrical wires were produced by the same procedure as in Examples 1 to 6, using the components shown in Table 7. Electron beam irradiation was carried out in Example 21 under the same conditions as in Examples 2 and 3, for cross-linking.

The wear resistance and flexibility of the coated electric wire obtained were measured by methods set out below.

### Wear resistance:

Measured by the procedures below in accordance with JASO (Japan Automobile Standards Organisation) D 611-94.

The wear resistance was measured by a blade reciprocation method. A test piece was made by cutting the coated wire to a length of 750mm. A blade was reciprocated over a length of 10mm in the axis direction on the surface of the coating material of the test piece which was fixed on a stand at room temperature (25°C), and the coating material was worn. The number of reciprocation cycles at which the blade reached the conductor were measured. The blade was reciprocated with a load of 7N and a speed of 50 cycles per minutes.

Then, the test piece was moved by 100mm, rotated by 90 degree in the clockwise direction, and the above measurement was repeated. The measurement was repeated three times for the same test piece, and those in which the minimum value was 150 cycles or more were given "pass".

Flexibility was determined as in Examples 10 to 14.

The results are shown in Table 7.

**Table 7**

| Example No. | | 20 | 21 | 22 | 23 |
|---|---|---|---|---|---|
| First polymer | MAH-EVA ²⁾ | 30 | 20 | | 20 |
| | MAH-SEBS ³⁾ | | | 30 | 30 |
| | EVA ¹⁾ | | 20 | | |
| Second polymer | PP ⁵⁾ | 70 | | 50 | 50 |
| | HDPE ⁶⁾ | | 60 | | |
| | LLDPE ⁷⁾ | | | 20 | |
| Magnesium hydroxide ⁸⁾ | | 100 | 120 | 180 | 200 |
| Antioxidant ⁹⁾ | | 1 | 1 | 1 | 1 |
| Crosslinking aid ¹⁰⁾ | | | 5 | | |
| Total | | 201 | 226 | 281 | 301 |
| Wear resistance | | Pass | Pass | Pass | Pass |
| Flexibility | | Good | Good | Good | Good |
| Components 1) to 10) as above. Component hardness:- MAH-EVA: Shore A hardness 60 (Shore D hardness 20 or less) MAH-SEBS: Shore A hardness 84 (Shore D hardness 29) PP: Shore D hardness 68 HDPE: Shore D hardness 64 LLDPE: Shore D hardness 52 EVA: Shore A hardness 85 (Shore D hardness 30) | | | | | |

### Examples 24 to 27

Coated electrical wires were produced by the same procedure as in Examples 1 to 6, using the components shown in Tables 9 and 10. Electron beam irradiation was carried out in Example 25 under the same conditions as in Examples 2 and 3, for cross-linking.

The wear resistance and whitening property of the coated electric wire obtained were measured by the above-mentioned methods.

The results are shown in Table 8.

**Table 8**

| Example No. | | 24 | 25 | 26 | 27 |
|---|---|---|---|---|---|
| First polymer | MAH-EVA ²⁾ | 30 | 20 | | 20 |
| | MAH-SEBS ³⁾ | | | 30 | 30 |
| | EVA ¹⁾ | | 20 | | |
| Second polymer | PP ⁵⁾ | 70 | | 50 | 50 |
| | HDPE ⁶⁾ | | 60 | | |
| | LLDPE ⁷⁾ | | | 20 | |
| Magnesium hydroxide ⁸⁾ | | 100 | 120 | 180 | 200 |
| Antioxidant ⁹⁾ | | 1 | 1 | 1 | 1 |
| Crosslinking aid ¹⁰⁾ | | | 5 | | |
| Total | | 201 | 226 | 281 | 301 |
| Wear resistance | | Pass | Pass | Pass | Pass |
| Whitening property | | Good | Good | Good | Good |
| Components 1) to 10) as above. Flexural modulus (JIS K 7106):- MAH-EVA: 25Mpa MAH-SEBS: 24Mpa PP: 1160Mpa * HDPE: 1000Mpa * LLDPE: 280Mpa * EVA: 26Mpa ( * Values determined according to JIS K 7203, now not in use. JIS K 7106 gives similar values). | | | | | |

### Examples 28 to 37

In Examples 28 to 32 of the present invention, the following components were kneaded at the ratio shown in Table 9 to prepare resin compositions:-
PP: see component 5) above (MFR=0.5g/10 minutes at a density of 0.90, temperature of 230°C, and a load of 2.16kg),
MAH-SEBS: see component 3) above (MFR=5.0g/10
minutes at a density of 0.92, temperature of 230°C, and a load of 2.16kg),
magnesium hydroxide A (average diameter of particles: 1.0µm, surface-treated with a vinyl silane coupling agent),
magnesium hydroxide B (average diameter of particles: 1.0µm, not surface-treated),
an ageing resister manufactured by Yoshitomi Fine Chemicals, Ltd. (TOMINOX TT (trade name)), a hindered phenol-based antioxidant).

The magnesium hydroxides A and B are manufactured by Kyowa Chemicals Co. Ltd.

Using an extrusion molding machine, each composition was applied at a thickness of 0.28mm to a conductor (seven soft copper wires twisted together and circularly compressed to give a smooth peripheral surface) having a sectional area of 0.5mm² to prepare an electrical wire. The die nipples used in the extrusion molding were of diameter 1.40mm and 0.88 mm. The extrusion temperature of the die was 210 to 230°C. The extrusion temperature of the cylinder was 200 to 240°C. The linear speed was 50m/minute.

As further Examples 33 to 37 of the invention, the same components as in Examples 28 to 32 were kneaded at the ratios shown in Table 10 to prepare compositions particularly selected to be suitable for use on electrical wire having a small diameter. Using an extrusion molding machine, each composition was applied at a thickness of 0.20mm to a conductor (seven soft copper wires twisted together and circularly compressed to give a smooth peripheral surface) having a sectional area of 0.13mm² to prepare the covered wire. The die nipples used in the extrusion molding had diameters of 0.50mm and 0.90 mm. The extrusion temperature of the die was 210 to 230°C. The extrusion temperature of the cylinder was 200 to 240°C. The linear speed was 50m/minute.

The covered electrical wires of Examples 28 to 37 were tested to examine fire resistance, wear resistance, tensile strength, tensile elongation, flexibility, and processability, as given below.

### Fire Resistance:-

A fire resistance test was conducted in accordance with JASO D611-94 of the Japanese Automobile Standards Organisation. In this, the electrical wire was cut to a length of 300mm to make a specimen. Each specimen was put in a test box made of iron and supported horizontally. In this state, using a Bunsen burner having a bore of 10mm, the tip of reducing flame was applied to the underside of the centre of each specimen such that the specimen was burnt for 30 seconds. An after-flame time of each specimen was measured. Specimens which had an after-flame time of less than 15 seconds were regarded as successful.

### Wear Resistance:-

Measured in accordance with JASO D611-94, as described above. In the case of Examples 28 to 32 specimens for which the blade reciprocated more than 150 times were regarded as successful. In the case of Examples 33 to 37, specimens for which the blade reciprocated more than 100 times were admitted as successful.

### Tensile Strength and Tensile Elongation:-

In accordance with JASO D611-94, tensile strength and tensile elongation tests were conducted. Each covered electrical wire was cut to a length of 150mm to make a specimen. The conductor was removed from the specimen to make a tubular body. Lines were marked on the centre of the specimen at intervals of 50mm. At room temperature of 23±5°C the ends of the specimen were mounted on chucks of a tensile testing machine. Then, the specimen was drawn at a speed of 200m/minute to measure a load and a length between adjacent marked lines when the specimen was broken. Specimens which had a tensile strength of more than 15.7Mpa and a tensile elongation of more than 125% were taken as successful.

### Flexibility:-

Specimens which gave a good hand feeling when they were bent by hand were admitted as successful.

### Processability:-

A part of the resin composition disposed at the end of each covered wire was peeled off from the conductor to check whether a whisker was formed. Specimens on which no whisker was formed were admitted as successful.

Tables 9 and 10 show the components (in parts by weight) of each resin composition and the evaluated results for each electrical wire.

**Table 9**

| Example No. | 28 | 29 | 30 | 31 | 32 |
|---|---|---|---|---|---|
| PP | 60 | 97 | 80 | 90 | 80 |
| MAH-SEBS | 40 | 3 | 20 | 10 | 20 |
| Magnesium hydroxide A | 70 | 90 | - | - | 90 |
| Magnesium hydroxide B | - | - | 50 | 200 | - |
| Age resister | 1 | 1 | 1 | 1 | 1 |
| Total (parts by weight) | 171 | 191 | 151 | 301 | 191 |
| Fire resistance | Pass | Pass | Pass | Pass | Pass |
| Wear resistance (reciprocation number of blade) | 500 | 1800 | 4000 | 300 | 2000 |
| Tensile strength (Mpa) | 28 | 31 | 34 | 23 | 33 |
| Tensile elongation (%) | 200 | 420 | 520 | 160 | 320 |
| Flexibility | Good | Good | Good | Good | Good |
| Processability | Pass | Pass | Pass | Pass | Pass |

**Table 10**

| Example No. | 33 | 34 | 35 | 36 | 37 |
|---|---|---|---|---|---|
| PP | 95 | 90 | 80 | 65 | 80 |
| MAH-SEBS | 5 | 10 | 20 | 35 | 20 |
| Magnesium hydroxide B | 120 | 150 | 200 | 160 | 100 |
| Age resister | 1 | 1 | 1 | 1 | 1 |
| Total (parts by weight) | 221 | 251 | 301 | 261 | 201 |
| Fire resistance | Pass | Pass | Pass | Pass | Pass |
| Wear resistance (reciprocation number of blade) | Over 500 | Over 500 | Over 500 | 180 | Over 500 |
| Tensile strength (Mpa) | 32 | 30 | 32 | 30 | 29 |
| Tensile elongation (%) | 260 | 220 | 210 | 250 | 265 |
| Flexibility | Good | Good | Good | Good | Good |
| Processability | Pass | Pass | Pass | Pass | Pass |

The coated wire of each of the Examples 28 to 37 of the present invention was satisfactory in fire resistance, wear resistance, tensile strength, tensile elongation, flexibility and processability. In particular, the resin composition of each of the Examples 30 and 32 shown in Table 9 had preferable mechanical strength properties such as wear resistance, tensile strength and tensile elongation and a good balance between these characteristics. Each of these compositions contained 70 to 90 parts by weight of propylene resin and 10 to 30 parts by weight of the styrene thermoplastic elastomer modified with the unsaturated carboxylic acid or its derivative and 50 to 150 parts by weight of the metal hydroxide per 100 parts by weight of the mixture.

In the present invention, when a filler and the first polymer are dispersed in the second polymer in a specified structural form (morphology), the formation of void at the filler/polymer interface can be prevented, and the water resistance and oil resistance of the resin composition can be improved. Further, the flexibility, high temperature deformation property, wear resistance, whitening resistance property and the like of the resin composition can be remarkably improved by appropriately selecting the physical properties of the first polymer and the second polymer.

To illustrate this preferred morphology obtainable in the present invention, Examples 38 and 39 are now given.

### Example 38

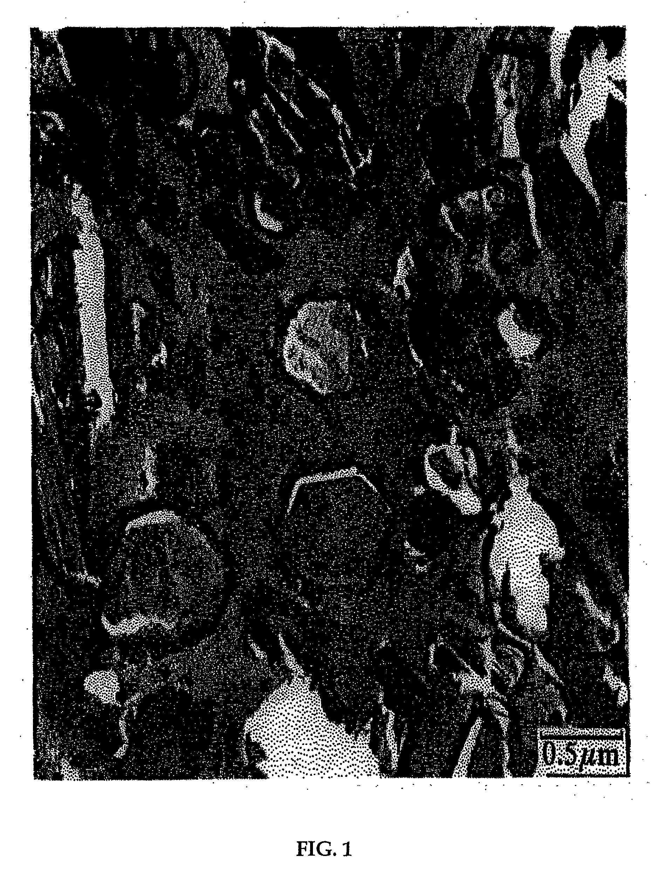

80 parts by weight of the propylene-ethylene block copolymer PP described above of melt flow rate 0.5g/10min, 20 parts by weight of the styrene-based elastomer MAH-SEBS described above and 90 parts by weight of magnesium hydroxide (untreated) were kneaded with a twin-screw extruder at 250°C. A TEM picture of the composition obtained was produced by a transmission electron microscope (TEM) H-800 (HITACHI) at an acceleration voltage of 100KV. The sample was cut to a thickness of about 10µm by a microtome for an electron microscope, and the cut sample was dyed with ruthenic acid (2% aqueous solution) for 2 hours. Then, the dyed sample was buried in an epoxy resin, and TEM was observed by an ultra thin intercept method. The scanning electron micrograph obtained is shown in Fig. 1.

As seen in Fig. 1 the approximately hexagonal particles which are situated at the central part of the picture and the surrounding narrow long particles are the particles of magnesium hydroxide. The dense portion forming a rim around each of these particles is the polymer MAH-SEBS which coats the particles, and the material filling the space between the particles is the continuous matrix phase of the polymer PP. This shows that the filler particles hardly coagulate, and are finely dispersed in the continuous phase of the polymer PP.

When applied as a covering to a wire conductor, this resin composition gives very satisfactory results.

### Example 39

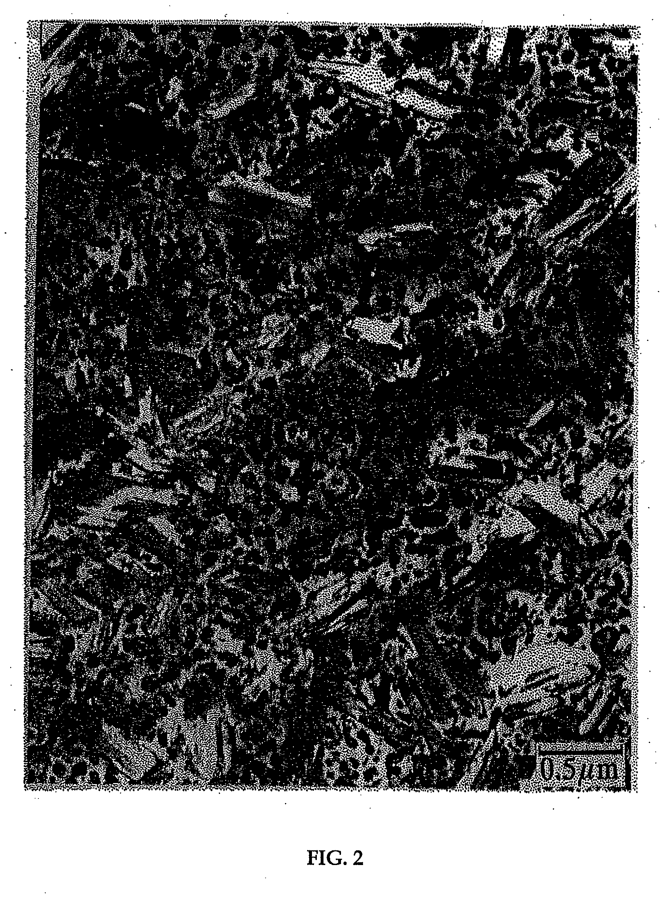

A composition was prepared in like manner as in Example 1 except that a hydrogenated styrene-butadiene copolymer, which is similar to MAH-SEBS but not modified with maleic anhydride (TUFTEC M1041 of Asahi Kasei Corporation) was used in place of MAH-SEBS. A TEM was obtained and is shown in Fig. 2.

Comparison of Figs. 1 and 2 show that the styrene-based polymer modified by unsaturated carboxylic acid, by reason of its affinity with the magnesium hydroxide filler particles, forms the structure of the mixture in which it surrounds the particles preferentially. This is advantageous for the properties of the composition as a wire covering.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An electrical wire having a conductor and an electrically insulating covering on the conductor, wherein the covering is a resin composition comprising one or more first polymers, one or more second polymers and a filler in the form of filler particles, said first and second polymers satisfying at least one of the following requirements (a), (b) and (c):
(a) each of the first and second polymers has an immersion saturated water absorption rate of 3% or less,
(b) the or each first polymer has a crystallinity of less than 50% and the or each second polymer has a crystallinity of 50% or more,
(c) the or each first polymer has a melting point or softening temperature of less than 100°C and the or each second polymer has a melting point or a softening temperature of 100°C or above.

2. An electrical wire according to claim 1, wherein said first and second polymers satisfy at least two of said requirements (a), (b) and (c).

3. An electrical wire according to claim 2, wherein said first and second polymers satisfy all three of said requirements (a), (b) and (c).

4. An electrical wire according to any one of claims 1 to 3, wherein one first polymer has a higher bonding affinity to said filler particles than said second polymer or polymers and acts to bond said filler particles to said second polymer or polymers.

5. An electrical wire according to any one of claims 1 to 4, wherein at least one first polymer has in its molecular structure a functional group effective to bond to the filler particles.

6. An electrical wire according to claim 5, wherein said functional group is selected from a carboxylic acid group, a carboxylic acid anhydride group and an epoxy group.

7. An electrical wire according to any one of claims 1 to 6, wherein said filler is an inorganic filler.

8. An electrical wire according to claim 7, wherein said inorganic filler is at least one filler material selected from carbon materials, metal oxides, metal hydroxides, metal carbonates, metal sulfates, metal silicates and metal nitrides.

9. A method of making an electrical wire according to any one of claims 1 to 8, comprising the steps of:
(i) forming said resin composition by mixing the first polymer or polymers, the second polymer or polymers and the filler, and
(ii) applying the resin composition to an electrical conductor to form an electrically insulating covering thereon.
